# EUROPEAN PATENT SPECIFICATION

(11) **EP 3 847 797 B1**
(45) Date of publication and mention of the grant of the patent: **26.02.2025**
(21) Application number: 19795041.3
(22) Date of filing: 09.09.2019
(51) Int. Cl.: H04M 3/42

(54) **SYSTEM FOR MAKING TELEPHONE CALLS**
SYSTEM ZUR HERSTELLUNG VON TELEFONANRUFEN
SYSTÈME POUR PASSER DES APPELS TÉLÉPHONIQUES

(30) Priority: 07.09.2018 GB 201814624
(43) Date of publication of application: 14.07.2021
(73) Proprietor: Pipcall Limited, London EC4A 3EB (GB)
(72) Inventor: HOCHHAUSER, Simon, London EC4A 3EB (GB); BOLTON, Andrew, London EC4A 3EB (GB); LAPES, David, London EC4A 3EB (GB); STONE, Antony, London EC4A 3EB (GB)
(74) Representative: Richardson, Mark Jonathan
(86) International application number: PCT/GB2019/052512
(87) International publication number: WO 2020/049323

(56) References cited:
- US-A1- 2007 058 611
- US-A1- 2007 058 611

## Description

### Field of the Invention

The present invention relates to a system for making and receiving telephone calls and more specifically, though not exclusively, to a system for making and receiving telephone calls between two communications devices including a platform which enables a call to be placed to a communication device and a call to be placed by a communication device using a proxy telephone number. The present invention has application to systems where it is desirable to enable a mobile phone to place and receive Public Switched Telephone Network (PSTN) phone calls using a plurality of telephone numbers with a single device and Subscriber Identification Module (SIM) card.

### Background of the Invention

There are multiple systems and methods available which enable a user of a communications device to engage in communication with a user of another communications device. Furthermore, there are several forms of communication which are available between communications devices, such as a purely audio communication, as well as video communication which includes both an audio and a visual component. There are many communications devices which enable such communications to be enacted, such as static (landline) telephones, mobile telephones, tablets, personal computers and laptops.

In order to enable communications to be relayed between two communications devices, each device is typically provided with an identifier which is used to uniquely identify the device, such as a traditional phone number, a number of a SIM card, a serial number of the device and an IMSI. When a communication is initiated, it is typical that a user will need to include the unique identifier of the communications device they wish to connect to (the recipient) in a communications request. It is also typical that the communications request will include Calling Line Identification (CLI) information which is used to indicate the unique identifier of the communications device which is placing the communications request. This information is provided to a server, switchboard or a suitable equivalent, which then forwards the communications request to the identified recipient. The communications request will typically include the CLI information of the communications device which has placed the request. Upon receipt of the communications request, the recipient will then decide whether to accept or reject the request accordingly. If the request is accepted, the server, switchboard or suitable equivalent will then connect the two communications devices over a communications channel which enables communication between the two devices. If the request is rejected, the device making the request will be informed and the two devices will not be connected.

Such communications are often important in a business setting, where communications may be required frequently. It has become commonplace for employees of a business to be required to make phone calls whilst they are not in an office environment and therefore do not have access to a dedicated "landline" phone with an associated phone number. In these circumstances, these phone calls will typically be placed using a mobile phone. Typically, the mobile phone will either be specifically provided by the employer (with an associated phone number), or the employee will use their own personal mobile phone.

Both of the above approaches to business phone calls have significant drawbacks. Where the employer themselves provide mobile phones for this purpose, it requires typically that the employee carries about two handsets simultaneously (their personal handset and the handset for business purposes). Furthermore, provided handsets are frequently damaged due to a lack of care from the employee, meaning expensive repairs and/ or replacements are required.

When the employees use their personal handset for business purposes, this will typically lead to employees mixing personal and business contacts on their phone and, if the employee subsequently leaves their employer, they will leave with information which is valuable to their employer.

Furthermore, the employee using their personal handset for business purposes can lead to a lack of privacy, since they are required to provide their CLI information (or other personal information) which may be undesirable when contacting a person that they subsequently do not wish to be contacted by outside of business hours. In some cases, it is possible for the employee to hide their CLI information from the intended recipient. This may specifically be requested and, when the communications request is forwarded to the recipient, they will be presented with a request from an unidentified initiator.

There is a significant drawback in simply preventing CLI information from being transmitted to the recipient, namely that the recipient does not have sufficient information to be able to contact the initiator (employee) at all. It is typically the case that, whilst the initiator may not want to provide personal information to a recipient as part of a phone call placed for a business purpose, they will still wish for the recipient to be able to contact them in some manner (particularly if the communications request is not accepted e.g. due to missing the request).

Whilst the above detraction is described in reference to an employee using their personal handset for a business purpose specifically, it is to be appreciated that these drawbacks may also exist in other scenarios. For example, the initiator may be calling a recipient that they do not wish to provide their personal information to, such as when calling a customer services line.

Another solution to the above mentioned problem is to provide a mobile handset which is capable of housing two Subscriber Identification Module (SIM) cards, each of which being associated with a different phone number, one of which is configured for personal use, and the other being used for business purposes. However, this solution also suffers from drawbacks. Most notably, in order for a SIM card to be used, it must be manually switched by the user and whilst one SIM card is active, the other is unable to be used. The consequence of this is that if a call is placed to a SIM card that is not active, the call will be missed. Handsets which can use two SIM cards simultaneously are not well known and are typically expensive. Furthermore, not all mobile service provider networks will support the use of such devices.

In the above examples, the communication to be used relates to standard telephony methods using Public Switched Telephone Networks (PSTNs) when calls are received and placed by landlines and a Global System for Mobile communications (GSM) when calls are received and placed by mobile handsets. Another solution which is employed is to use Voice over Internet Protocol (VoIP) services from a handset which has access to Internet services. These may be used to place and receive voice or video calls that do not utilise the information stored on the SIM card. Instead they rely on a separate login to the service and communicate using transfer of data packets via the Internet. This login will typically be associated with the employer specifically and therefore does not require the personal information of the employee to be transmitted. However, these services require a good connection to the Internet in order to maintain a good quality of communication. Where this connection is not possible, calls may be of low quality or may be lost entirely. Furthermore, where a connection to a Wi-Fi network is not available, the call will be made over data services such as 3G/4G and the use of these data services is typically limited to a specified amount for a particular user (e.g. a monthly data allowance). The continued use of these data networks will therefore rapidly deplete the user's allowance which can lead to either these services becoming unavailable or alternatively can lead to additional data needing to be purchased which can be expensive. The use of these services also drains the power of a mobile handset at a high rate when compared to the use of GSM as described above. US2007058611 provides an example of a solution where a caller makes a call from a mobile phone, using a network proxy in order to provide an enterprise caller ID to the called party instead of the mobile phone's caller ID

The present invention has been devised against this backdrop and seeks to obviate at least some of the above-described problems with existing systems. More particularly, the present invention aims to provide a way of enabling a single device to be used in a manner which allows phone calls to be placed and received over a PSTN for a plurality of different phone numbers simultaneously.

### Summary of the Invention

According to one aspect of the present invention there is provided a system according to claim 1.

In this way the present invention solves at least one of the problems of the prior art outlined above. It is possible with the present invention to route communications between two devices, where one of the devices is able to mask their device ID whilst still enabling the device to initiate communications with their device ID when desired. The present invention therefore eliminates the need for separate devices to be used in order to initiate communications using an ID other than the device ID. This similarly eliminates the need to provide a handset with a dual SIM card arrangement which needs to be manually switched. This consequently avoids the need for an initial capital outlay for obtaining a plurality of devices or for utilising a potentially expensive dual SIM handset. It also eliminates the need for monitoring calls made using a single device for dual purposes.

The input means may additionally be configured to receive a connection request from an external communications device to connect the client device to the third party device. This advantageously enables a user to initiate communications between a client device and a third party device without requiring that the device be used in order to do so. This may be of particular use when a user of the system wishes to centrally initiate communications between devices or where it is desirable that a user other than the owner of the client device wishes to initiate a communications request on the behalf of the device owner.

The connection request may comprise the third party ID and information relating to the device ID and the proxy ID. In this case, the processor may be configured to generate call instructions based on the information relating to the device ID and the proxy ID provided in the connection request.

The client communications channel may comprise a PSTN connection or a GSM connection, and the third party communications channel may comprise a PSTN connection or a GSM connection. The client communications channel may comprise a VolP connection and the third party communications channel may comprise a VolP connection.

The system may comprise the network device. The networking device may comprise a private branch exchange.

The system may be further configured to receive connection requests from a plurality of client devices, each client device having a device ID and a proxy ID, and the processor being configured to generate call instructions using the device ID and the proxy ID of the client device providing the connection request. This advantageously enables a single system to be used to route communications for a plurality of devices.

Where a client ID is provided, the system may further comprise a database containing data records, each data record providing a correspondence relationship between the client ID, the device ID and the proxy ID, and wherein the processor is configured to query the database to determine the correspondence relationship in order to generate call instructions for the networking device.

The system may comprise a database containing data records, each data record providing a correspondence relationship between the client device, the device ID and the proxy ID, and wherein the processor is configured to query the database to determine the correspondence relationship in order to generate call instructions for the networking device.

The input means may be further configured to receive a connection request using an incoming third party communications channel from the third party device to connect to the proxy ID; the processor may be further configured to generate a call confirmation request to be transmitted to the client device; and the output means may be further configured to output the call confirmation request to the client device via the external communications network; wherein: the input means may be further configured to receive connection request information generated by the client device indicating whether the connection request should be accepted in response to the call confirmation request; the processor may be further configured to determine whether to accept or decline the connection request based upon the connection request information and generate call instructions to be executed on the networking device when the connection request information indicates the connection request is accepted, the call instructions comprising: i) instructions to call the client device with a client confirmation communications channel using the device ID; and ii) instructions to connect the incoming third party and client confirmation communications channels; and the output means may be configured to output the call instructions to the networking device.

According to another aspect of the invention, there is provided a system for routing communications between a client device and a third party device, the client device having a device ID and a proxy ID and the third party device having a third party ID, the system comprising: an input means to receive a connection request using a third party communications channel from the third party device to connect to the proxy ID; a processor configured to generate a call confirmation request to be transmitted to the client device; and an output means configured to output the call confirmation request to the client device via an external communications network; wherein: the input means is further configured to receive connection request information generated by the client device indicating whether the connection request should be accepted in response to the call confirmation request; the processor is further configured to determine whether to accept or decline the connection request based upon the connection request information and generate call instructions to be executed on a networking device when the connection request information indicates the connection request is accepted, the call instructions comprising: i) instructions to call the client device via a client communications channel using the device ID; and ii) instructions to connect the third party and client communications channels; and the output means is configured to output the call instructions to the networking device. The connection between the client and third party communications channels functionally connects the two channels in order to enable communication between the client device and the third party device.

In this way this aspect of the present invention solves at least one of the problems of the prior art outlined above. It is possible with the present invention to route communications between a third party device and a client device, where the communications request is initiated using an ID other than the device ID. The present invention therefore eliminates the need for separate devices to be used in order for a communications device to receive communications via a plurality of IDs. This similarly eliminates the need to provide a handset with a dual SIM card arrangement which needs to be manually switched and eliminates the possibility that a desired communication is missed due to the incorrect SIM card being selected.

The processor of this aspect may be further configured to generate second call instructions when the connection request information indicates the connection request is declined, the second call instructions comprising: i) instructions to call a voicemail inbox with a voicemail communications channel, the voicemail inbox having a voicemail ID, with the call being placed using the voicemail ID; and ii) instructions to connect the third party and voicemail communications channels. This advantageously enables communications to always be established, even where the client device does not wish for a communication channel to be established directly with the client device.

The client device of this aspect may have a plurality of proxy IDs, and the connection request is received from the third party device to connect to any one of the plurality of proxy IDs of the client device.

In a further aspect of the invention, there is provided a method for routing communications between a client device and a third party device, the client device having a device ID and a proxy ID and the third party device having a third party ID, the method comprising: receiving a connection request from the client device to connect to the third party device; generating call instructions to be executed by a networking device, the call instructions comprising: i) instructions to call the client device with a client communications channel using the device ID; ii) instructions to call the third party device with a third party communications channel using the third party ID and using the proxy ID as the caller ID; and iii) instructions to connect the client and third party communications channels; and outputting the call instructions to the networking device. The advantages of this method are the same as given above for the corresponding system aspect of the present invention.

In yet a further aspect of the present invention, there is provided a method according to claim 11.

According to a still further aspect of the present disclosure, there is provided a computer program product comprising instructions which, when the program is executed by a computer, cause the computer to carry out the method of the further or yet a further aspects of the present disclosure as outlined above.

### Brief Description of the Drawings

In order that the invention may be more readily understood, reference will now be made, by way of example, to the accompanying drawings in which:
Figure 1 is a schematic block diagram illustrating a phone call redirection system in accordance with an embodiment of the present invention in combination with a use scenario for the system for enabling calls to be placed and received by a communications device;
Figure 2A is a flow diagram showing a method of operation of the phone call redirection system of Figure 1 relating to the receipt of a communications request from a client device to route communications to a third party device;
Figure 2B is a flow diagram showing a method of operation of the phone call redirection system of Figure 1 relating to the receipt of a communications request from a third party device to route communications to a client device;
Figure 3 is a schematic block diagram, showing in greater detail the middleware platform of Figure 1 for receiving a call request from a client device and a third party device and for routing communications between the two;
Figure 4A is a flow diagram showing a method of operation of the middleware platform of Figure 3 relating to the receipt and processing of a transmission;
Figure 4B is a flow diagram showing a method of operation of the middleware platform of Figure 3 relating to the generation of call instructions;
Figure 4C is a flow diagram showing a method of operation of the middleware platform of Figure 3 relating to the generation of a call confirmation request;
Figure 5 is a schematic block diagram illustrating a phone call redirection system in combination with a use scenario for the system where the system is configured to receive connection requests from an external connection device; and
Figure 6 is a schematic block diagram illustrating an implementation scenario of an arrangement of a phone call redirection system.

### Detailed Description of Example Embodiments

Specific embodiments are now described with reference to the appended figures.

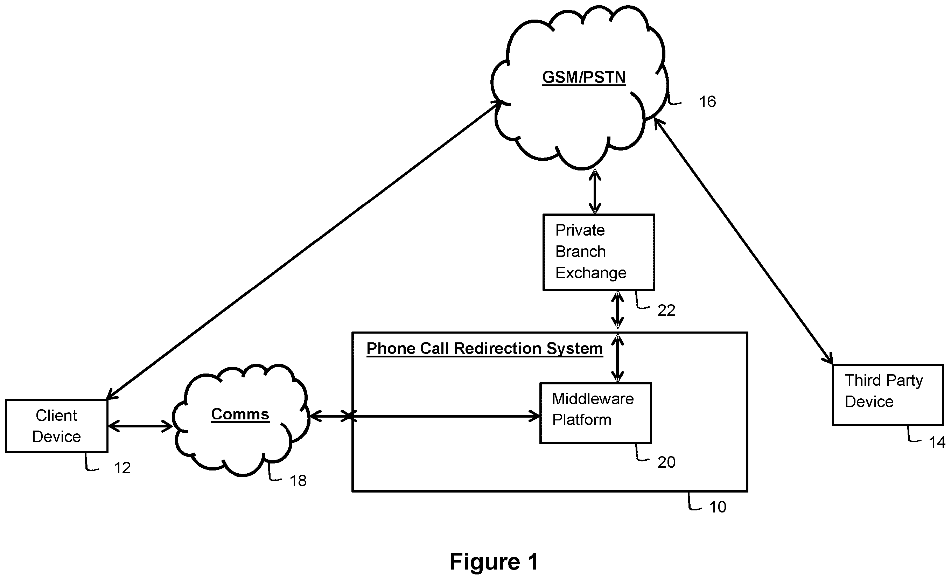

Turning firstly to Figure 1, there is shown a use scenario for a phone call redirection system 10 according to an embodiment of the present invention which routes communications between a first 12 and second 14 communications device, both of which are located remotely from the phone call redirection system 10. In some embodiments, one or both of the communications devices 12, 14 may refer to a mobile phone handset or a landline phone handset. In particular, the phone call redirection system 10 is configured to route telephone calls comprising audio data between the two communications devices 12, 14 over a suitable PSTN and/or GSM network 16. In this use scenario, the first communications device 12 (also referred to herein as 'a client device') is functionally distinct from the second communications device 14. In addition to being configured to communicate with the second communications device 14 (also referred to herein as a 'third party device') over the PSTN and/or GSM network 16, the client communications device 12 is also configured to transmit information to and receive information from the phone call redirection system 10 via an external wireless data communications network 18. Such an external wireless data communications network 18 may comprise any network capable of supporting suitable wireless communication methods for the transmission of data, for example a wide-area network such as the Internet. Examples of such networks include 3G networks, 4G networks and Wi-Fi networks.

There are several modifications which may be made to the phone call redirection system 10 to provide additional functionality. These are described in greater detail in the relevant sections below.

In the arrangement of Figure 1, the client device 12 will typically previously be identified to the phone call redirection system 10. This identification may comprise providing the phone call redirection system 10 with a client identification (client ID) which enables the phone call redirection system 10 to determine when information has been received from the client device 12. The client ID is used by the phone call redirection system 10 to identify a user of a client device 12 which is known or registered to the phone call redirection system 10. This may comprise login details entered by the user upon registration to the phone call redirection system 10. Alternatively, the client ID may be generated by an appropriately configured element (such as a processor) of the phone call redirection system 10 itself when a new user indicates that they wish to register to the phone call redirection system 10. Further alternatively, the client ID may comprise a telephone number of the client device 12 (or other unique identifier associated with the client device 12 such as a serial number or IMSI), or where communications are achieved using a VoIP service the IP address of the client device 12 or an email address which has been registered to the client device 12. Where the client ID comprises a phone number, this number may be associated with a SIM card which is coupled to the handset. Adaptations of the phone call redirection system 10 to enable registration of a new user are discussed in greater detail in the setup and maintenance of client ID section below. It is to be appreciated that the above examples are included by way of illustration only, and any suitable means of identification may be used which enable the functionality of the present invention to be implemented.

The client device 12 is additionally associated with a device ID which may be included in a communications request to the client device 12, and which enables a client communications channel to be established between the client device 12 and a complementary endpoint of the client communications channel upon receipt of such a communications request. The device ID is an identification which enables communications to be established directly with the client device 12 either by elements of the phone call redirection system 10 or the third party device 14 if the third party device 14 has access to the device ID. The device ID may comprise a telephone number of the client device 12, or where communications are achieved using a VoIP service the IP address of the client device 12, or an email address which has been registered to the client device 12. In some arrangements, the client ID may be the same as the device ID. Similarly, the third party ID is equivalent to the device ID but for the third party device 14. It is also to be appreciated that in some cases, in order to establish a communications channel with the client device 12 and/or the third party device 14, the respective devices must additionally confirm that they wish for a communications channel to be established.

The complementary endpoint described above may comprise a node in a third party network connector. The node acts as an intermediary through which communications can be routed. When referring to connection of communications channels, this may refer to the routing of communications through such a node to enable a communication to pass along each communication channel. It is to be appreciated that the "third party" of the third party network connector as described herein is not the same third party as used with reference to the third party device 14 and simply denotes a party external to the client device 12 and the phone call redirection system 10.

The third party device 14 is associated with a third party ID which may be included in a communications request to the third party device 14, and which enables a third party communications channel to be established between the third party device 14 and a complementary endpoint of the third party communications channel upon receipt of such a communications request. The third party ID is equivalent to the device ID but for the third party device 14. Where communications are to be established between the client device 12 and the third party device 14, the complementary endpoints of the client and third party communications channels established to the client device 12 and the third party device 14 respectively may comprise the devices themselves (i.e. the endpoint of the client communications channel established to the client device 12 may be the third party device 14, and vice versa). Alternatively, the endpoints of the client and third party communications channels may be a single node through which communications are routed. This may comprise a third party network connector, which forms part of the PSTN/GSM or other telephony network 16.

The third party network connector may be a telephony network provider which typically provides phone numbers to be associated with communications devices. In standard use, communications between two communications devices are regulated by the third party network provider. In standard use, a communications device will provide a communications request indicating an ID (analogous to the device ID or third party ID) of another communications device. This request is then received by the third party network connector over a first communications channel. The third party network connector then creates a second communications channel to the another communications device in accordance with the provided ID. The phone call redirection system 10 may utilise the functionality of a third party network connector without requiring any modification of the functionality of the third party network connector.

In some embodiments, the device ID and the third party ID may each comprise a telephone number of the respective devices to enable a communication over a PSTN, GSM or other telephony network. In other embodiments, the device ID and the third party ID may comprise an IP address which enables communication to be established over an Internet communications channel using VoIP services.

In addition, the client device 12 will typically be associated with one or more proxy IDs. A proxy ID acts in a similar manner to the device ID in that it enables a communications channel to be established between the client device 12 and a complementary endpoint of the communications channel. The proxy ID is an identification which may be used by the third party device 14 in a similar manner to the device ID to contact the client device 12 by initiating a communications request. However the communications channel is not established directly to the client device 12, but instead is directed to the phone call redirection system 10 which then proceeds to determine whether communications should be established in accordance with the description given below. The proxy ID may comprise a proxy telephone number associated with the client device 12, or where communications are achieved using a VoIP service a proxy IP address of the client device 12. Where a third party network connector is used in accordance with description above, when a third party device 14 initiates a communications request using the proxy ID, this request may be received by the third party network connector. The third party network connector then directs the communications request to the phone call redirection system 10 that the proxy ID is associated with.

The phone call redirection system 10 then handles the communications request in order to establish a communications channel between the client device 12 and a complementary endpoint in accordance with embodiments described above. In this manner, the use of the proxy ID in conjunction with the phone call redirection system 10 enables communications channels to be established without the device ID of the client device 12 ever needing to be provided to the third party device 14. This also enables communications channels to be established with the client device 12 using a plurality of IDs without requiring that the client device 12 be reconfigured to switch the ID of the client device 12. This prevents a scenario in which a third party device 14 attempts to contact the client device 12 using an ID that the client device 12 is not currently configured to receive.

The phone call redirection system 10 of Figure 1 comprises a middleware platform 20 which is communicably coupled to the client device 12 via the external communications network 18. The middleware platform 20 is configured to receive communications requests from the client device 12 to establish communications with the third party device 14. When such a communications request is received, this is referred to herein as an "outgoing call" process. The middleware platform 20 is additionally configured to receive communications requests from the third party device 14 to establish communications with the client device 12. When such a communications request is received, this is referred to herein as an "incoming call" process.

In the outgoing call process, the middleware platform 20 is configured to receive a communications request directed to the third party device 14 from the client device 12 over the external communications network 18 comprising information which enables communications to be routed between the client device 12 and the third party device 14. The information received by the middleware platform 20 from the client device 12 will typically comprise the client ID of the client device 12 in addition to the third party ID of the third party device 14 the client device 12 is to engage in communication with. Upon receipt of the information, the middleware platform 20 is configured to determine the relevant device ID and proxy ID of the client device 12 associated with the client ID. Once this information is determined, the middleware platform 20 is configured to generate call instructions to enable communications to be routed between the client device 12 and the third party device 14. The call instructions include an instruction to call the client device 12 using the device ID and to establish a client communications channel between the client device 12 and a corresponding endpoint. The call instructions also include an instruction to call the third party device 14 using the third party ID and using the proxy ID as the CLI (or equivalently the caller ID) and to establish a third party communications channel between the third party device 14 and the previously defined corresponding endpoint. Finally, the instructions also include an instruction to connect the client and third party communications channels established to the client device 12 and the third party device 14. Once the two communications channels are connected, communications are enabled between the two devices 12, 14. Where a third party network connector is used, the call instructions may ultimately be provided to the third party network connector, which then proceeds to establish a client communications channel between the client device 12 and the third party network connector and a third party communications channel between the third party device 14 and the third party network connector. The communications channels are then connected by the third party network connector to enable communications between the two devices 12, 14. The corresponding endpoints described above may each be located on the third party network connector.

In the incoming call process, the middleware platform 20 is configured to receive a communications request directed to the client device 12 from the third party device 14 over a third party communications channel, comprising information which enables communications to be routed between the client device 12 and the third party device 14. The communications channel used is suitable for enabling the communication with the client device 12 to be established in accordance with embodiments discussed above. In arrangements where a third party network connector is used, this communications request may be received by the third party network connector and subsequently transmitted to the middleware platform 20 by the third party network connector. The information received by the middleware platform 20 from the third party device 14 will typically comprise the proxy ID of the client device 12 in addition to the third party ID of the third party device 14 the client device 12 is to engage in communication with. Upon receipt of the information, the middleware platform 20 is configured to determine the relevant client ID and device ID of the client device 12 associated with the proxy ID. The middleware platform 20 is also configured to generate a call confirmation request which is transmitted to the identified client device 12 via the external communications network 18 using the client ID. The call confirmation request will typically comprise an indication that a communications request has been made (and at least the third party ID of the third party device 14 that initiated the communications request) so that a user of the client device 12 is able to identify the identity of the third party device 14 which has made the communications request. The middleware platform 20 is also configured to receive a response to the call confirmation request from the client device 12 and to determine from the response whether the communications request should be accepted and communications should be routed between the client device 12 and the third party device 14. The response comprises information indicating whether the middleware platform 20 should generate call instructions to enable communications to be routed between the client device 12 and the third party device 14. The response may also comprise information comprising the client ID of the client device 12 as well as the third party ID of the third party device 14 which made the incoming call request. The response also optionally contains the device ID of the client device 12. If the response indicates that the request is not to be accepted, then the middleware platform 20 is configured to not route communications between the client device 12 and the third party device 14. If the response indicates that the request is to be accepted, then the middleware platform 20 is configured to generate call instructions to enable communications to be routed between the client device 12 and the third party device 14. The call instructions include an instruction to call the client device 12 using the device ID and to establish a client communications channel between the client device 12 and a corresponding endpoint. The call instructions also include an instruction to connect the client communications channel established to the client device 12 and the third party communications channel used by the third party device 14 to establish the initial communications request. Once the two communications channels are connected, communications are enabled between the two devices 12, 14. Where a third party network connector is used, the call instructions may ultimately be provided to the third party network connector, which then proceeds to establish a client communications channel between the client device 12 and the third party network connector. The communications channels are then connected by the third party network connector to enable communications between the two devices 12, 14.

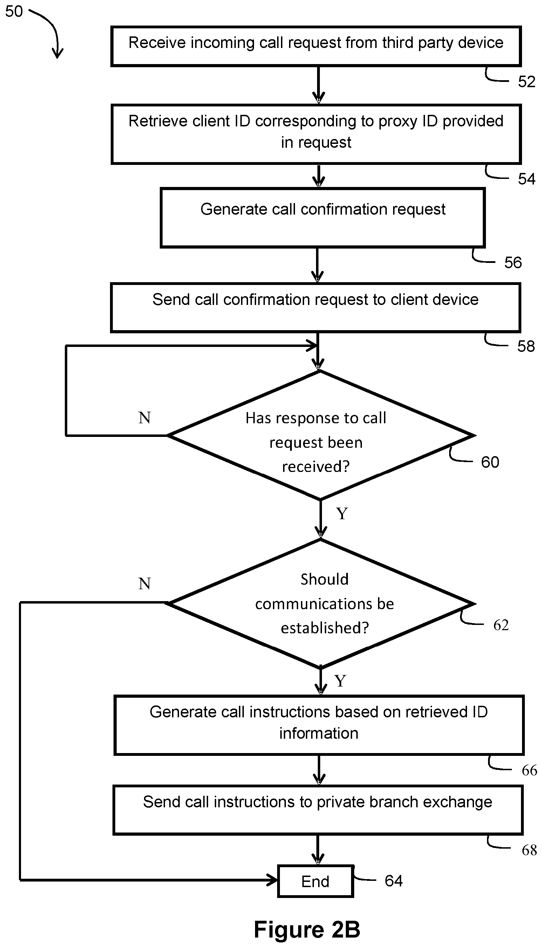

In both the outgoing and incoming call scenarios described above, the call instructions generated by the middleware platform 20 are transmitted to a private branch exchange (PBX) 22 which is communicably coupled to the middleware platform 20. The PBX 22 is a system which enables a communication request to be switched between communications channels. The call instructions generated by the middleware platform 20 are configured to instruct the PBX 22 to place calls to the client device 12 and the third party device 14 over suitable communications channels and to subsequently connect the communication channels to enable communication between the two devices 12, 14. The middleware platform 20 is also configured to receive incoming calls from the third party device 14 via the PBX 22 over a communications channel which is later used when connecting the client device 12 and the third party device 14. The way in which this is achieved is described below with reference to Figure 2B. In the system of Figure 1, the PBX 22 is shown as being separate from the phone call redirection system 10. In some embodiments, the PBX 22 instead forms part of the phone call redirection system 10. In arrangements in which a third party network connector is used, the PBX 22 may be configured to receive incoming calls from the third party network connector. In such arrangements, the PBX 22 may also be configured to instruct the third party network connector to establish a communications channel between the client device 12 and the third party network connector in response to the receipt of suitably configured call instructions. The communications channels are then connected by the third party network connector to enable communications between the two devices 12, 14.

It is to be appreciated that whilst only one client device 12 and one third party device 14 are shown in the illustration of Figure 1, the phone call redirection system 10 may be appropriately configured to accept outgoing and incoming call requests from a plurality of client devices 12 and third party devices 14 respectively and may be configured to route communications between any one of the plurality of client devices 12 to any one of the plurality of third party devices 14 in accordance with embodiments described above. In such embodiments where a plurality of client devices 12 are available to receive calls and to place outgoing calls, the phone call redirection system 10 may be configured to correspond each client ID with a separate proxy ID. It is also to be appreciated that whilst the third party device 14 has been described as having separate functionality to the client device 12 with respect to the phone call redirection system 10, in some embodiments, the third party device 14 may equally be configured to register with the phone call redirection system 10 in a similar manner to the described client device 12 and be provided with the same functionality.

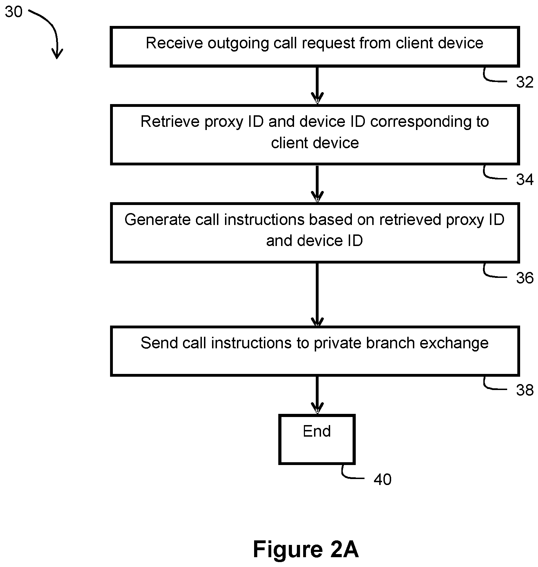

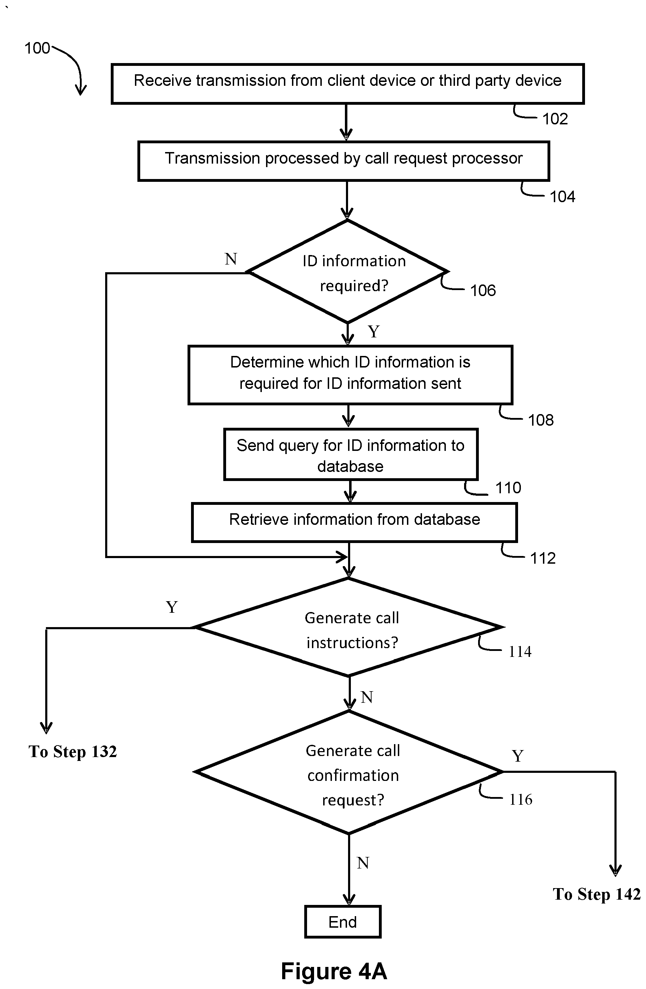

Referring now to Figure 2A, there is shown a method of operation 30 of the phone call redirection system of Figure 1. Specifically, the method 30 relates to the process followed when an outgoing call request is received from the client device 12. The method 30 begins by receiving, at Step 32, an outgoing call request from the client device 12. The outgoing call request will be received by the middleware platform 20 and the request will comprise at least the client ID and the third party ID of the third party device 14 that the client device 12 wishes to communicate with. Following the receipt of the outgoing call request, the device ID and the proxy ID of the client device 12 are retrieved, at Step 34 by the middleware platform 20. The way in which this is achieved in described in greater detail with reference to Figure 4A.

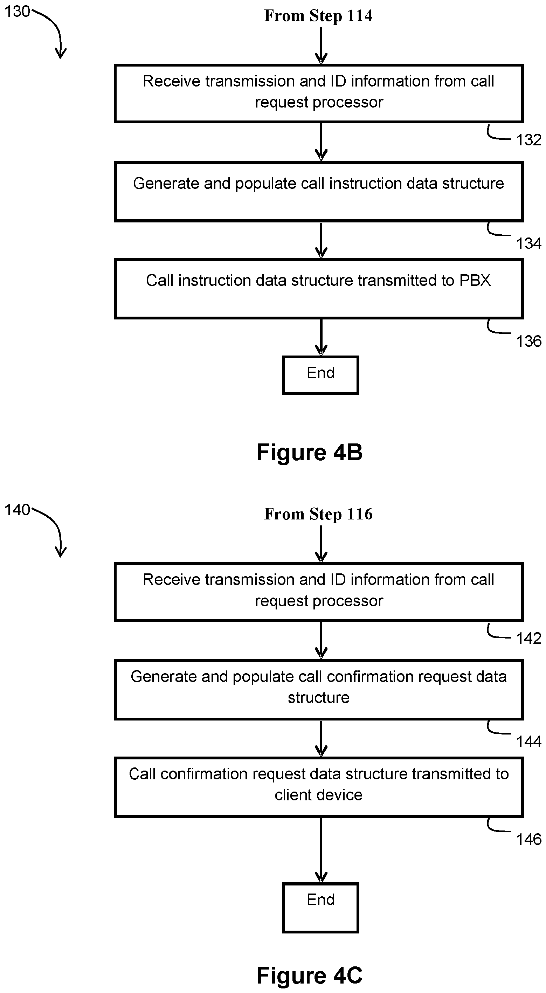

Once the device ID and the proxy ID have been retrieved, call instructions are generated, at Step 36, by the middleware platform 20. The call instructions comprise a set of instructions to enable communications to be routed between the client device 12 and the third party device 14 associated with the identified third party ID. The call instructions are configured to be executed by a PBX 22. In accordance with embodiments described above, the call instructions comprise an instruction to call the client device 12 using the retrieved device ID and to establish a client communications channel between the client device 12 and a corresponding endpoint. The call instructions also comprise an instruction to call the third party device 14 using the identified third party ID and using the proxy ID as the caller ID and to establish a third party communications channel between the third party device 14 and the corresponding endpoint of the client communications channel. Finally, the instructions also comprise an instruction to connect the two communications channels established to the client device 12 and the third party device 14. The ways in which the call instructions are generated are described below with reference to Figure 4B.

Once the call instructions are generated, the call instructions are then sent, at Step 38, to the PBX 22 where they will be executed in order to route communications between the client device 12 and the third party device 14. Once the call instructions have been sent, the method of operation 30 ends at Step 40. In embodiments where the PBX 22 forms part of the phone call redirection system 10, the execution of the call instructions may also form part of the method of operation 30 and will be included between Steps 38 and 40.

Turning now to Figure 2B, there is shown a further method of operation 50 of the phone call redirection system of Figure 1. Specifically, the method 50 relates to the process followed when an incoming call request is received from the third party device 14. The method 50 begins by receiving, at Step 52, an incoming call request from the third party device 14. The incoming call request will be received by the middleware platform 20 and will typically be received from the PBX 22. The incoming call request from the third party device 14 will typically have established a third party communications channel and will identify a proxy ID for the client device 12 that the third party device 14 is trying to communicate with, as well as the third party ID of the third party device. The proxy ID will lead to the incoming call being routed to the PBX 22 for forwarding on to the phone call redirection system 10. Following the receipt of the incoming call request by the middleware platform 20, the client ID and (optionally) the device ID of the client device 12 corresponding to the identified proxy ID is retrieved, at Step 54 by the middleware platform 20. The way in which this is achieved in described in greater detail with reference to Figure 4A.

Once the client ID has been retrieved, a call confirmation request is generated, at Step 56, by the middleware platform 20. The call confirmation request contains information indicating the third party ID of the third party device 14 which made the initial incoming call request. Optionally, the call confirmation request may also indicate the proxy ID that the third party device 14 used to make the incoming call request. This may be of particular use when the client device 12 is associated with a plurality of proxy IDs and each proxy ID may be associated with a particular purpose for the user (e.g. a first proxy ID may be associated with a particular business purpose and a second proxy ID may be associated with a secondary business purpose). Once the call confirmation request is generated, the confirmation request is transmitted, at Step 58, to the client device 12 associated with the retrieved client ID via the external communications network 18. The way in which this is achieved is described with reference to Figure 4C. Since the confirmation request is transmitted using the client ID, the confirmation request does not need to include the device ID associated with the client. However, optionally this information may be transmitted as part of the confirmation request.

Once the confirmation request has been transmitted, the middleware platform 20 proceeds to determine, at Step 60, whether a response to the confirmation request has been received from the client device 12. The response will typically comprise information indicating whether the client device 12 wishes to establish communications with the third party device 14, as well as the client ID of the client device 12 providing the response. If a response to the confirmation request has not been received, the method 50 returns to Step 60 and proceeds to continue to wait for a response to be received. If it has been determined that a response has been received at Step 60, the middleware platform 20 then proceeds to determine, at Step 62, whether communications should be established between the client device 12 and the third party device 14 based upon the information in the response to the confirmation request. If the response indicates that communications should not be established, the method proceeds to end at Step 64 and no further action is taken. If instead the response indicates that communications should be established, then call instructions are generated, at Step 66, by the middleware platform 20. The call instructions comprise a set of instructions to enable communications to be routed between the client device 12 and the third party device 14. The call instructions are configured to be executed by the PBX 22. In accordance with embodiments described above, the call instructions comprise an instruction to call the client device 12 using the previously retrieved or otherwise provided device ID and to establish a client communications channel between the client device 12 and a corresponding endpoint. The instructions also comprise an instruction to connect the communications channel established to the client device 12 and the third party communications channel used by the third party device 14 to establish the initial communications request. The manner in which the call instructions are generated are described below with reference to Figure 4B. If the device ID is not provided as part of the response or it has not previously been retrieved, then, prior to the generation of the call instructions, the device ID is retrieved using the proxy ID information previously provided in accordance with the embodiments described above.

In some embodiments, whilst the middleware platform 20 awaits a response, the ID information which has already been provided or retrieved may be retained in a suitable memory or buffer. When the response to the receipt is received, the information stored in the memory or buffer is retrieved and utilised for use in the next steps of the method 50. This can prevent the need for a second comparison and retrieval of client information based on the provided proxy ID as described above.

In some embodiments, the middleware platform 20 may be configured to wait for a predetermined period of time for a response to the call confirmation request. In such embodiments, if a response is not received within this predetermined period, the middleware platform 20 may be configured to interpret this as an indication that communications should not be established. The method 50 in these embodiments is configured to proceed in accordance with embodiments described above, with the lack of response in the predetermined period of time being treated as a declination of the incoming call request. The predetermined period may be configured to be variable and may be varied by an operator of the phone call redirection system 10. In some embodiments, the predetermined period may be variable by the user of the client device 12, and may be varied by the provision of appropriately configured instructions over the external communications network 18.

Returning to the method 50 of Figure 2B, once the call instructions are generated, the call instructions are then sent, at Step 68, to the PBX 22 where they will be executed in order to route communications between the client device 12 and the third party device 14. Once the call instructions have been sent, the method of operation 50 ends at Step 64. In embodiments where the PBX 22 forms part of the phone call redirection system 10, the execution of the call instructions may also form part of the method of operation 30 and will be included between Steps 68 and the end of the method 50.

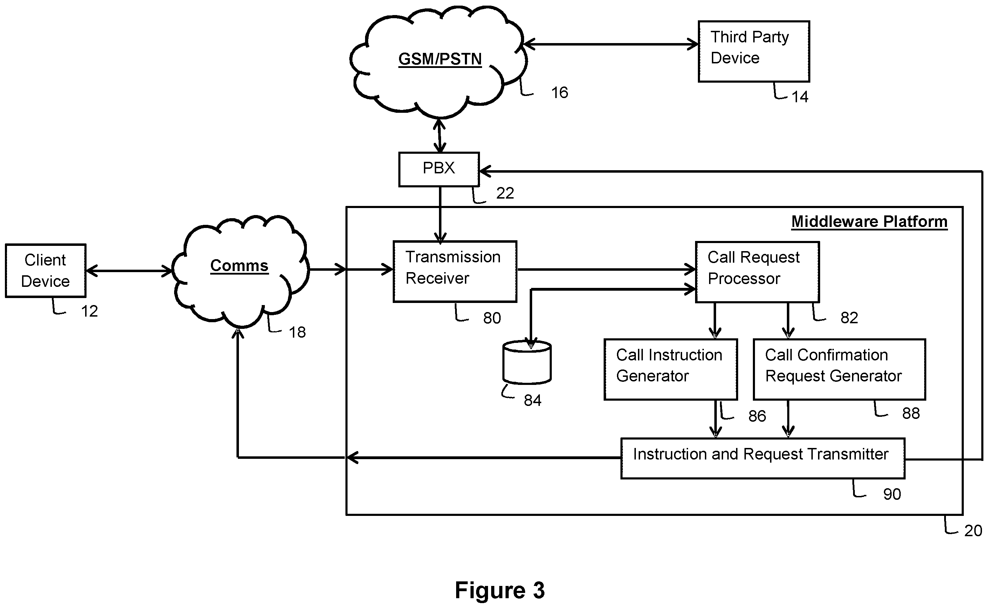

Referring now to Figure 3, there is shown in greater detail a middleware platform 20 in accordance with an embodiment of the present invention. The middleware platform 20 is configured to receive and transmit data messages from a client device 12 via an external communications network 18 as described above. The data messages relate to requests to place an outgoing call to a third party device 14, and also relate to responses to call confirmation requests which are generated by the middleware platform 20 in response to an incoming call being received. The middleware platform 20 is also configured to receive an incoming call request from a third party device 14 via a PBX 22. Upon receipt of any data messages and/or call requests, the middleware platform is configured to process the received transmission and, depending on the type of transmission received, to appropriately generate instructions to route communications between the devices 12, 14 or generate a call confirmation request for transmission to the client device 12.

The phone call redirection system 10 comprises a transmission receiver 80 which receives transmissions from the client device 12 and the PBX 22, where transmissions from the client device 12 generally comprise data messages and transmissions from the PBX 22 generally comprise incoming call requests. The transmission receiver 80 is configured to receive the transmissions from either of the locations. In some embodiments, the transmission receiver 80 additionally comprises a processing means which is configured to determine the location that the transmission has been received from (i.e. either the client device 12 or the PBX 22). In further embodiments, the phone call redirection system 10 may be provided with a plurality of transmission receivers 80, where each transmission receiver 80 is configured to receive a particular type of transmission. For example, a transmission receiver 80 may be provided which is configured to receive transmissions received via the external communications network 18 (typically originating from the client device 12), and a separate transmission receiver 80 may be provided which is configured to receive transmissions received via the PBX 22 (typically originating from the third party device 14)

As the transmissions are received from a remote location, it is conceivable that the transmissions may undergo some form of data corruption as they are being transmitted, or that the data that is provided in the transmission does not provide all of the necessary information required to be further processed by the phone call redirection system 10 (for example, the transmission may not indicate the client ID or the third party ID). In some embodiments of the phone call redirection system 10, the transmission receiver is additionally configured to verify the veracity and integrity of the received transmissions and only provide further processing if the transmission is complete and uncorrupted. Where the veracity and integrity of the transmission is not sufficient to allow the processing to occur, the transmission receiver 80 may reject the information. In some embodiments, this rejection may be accompanied by the generation of a notification to be provided to the source of the transmission to indicate that an error has been encountered. In these embodiments, the transmission receiver 80 may additionally be provided with a transmitter to enable such error message to be sent to the source device. Alternatively, the transmission receiver 80 may provide the error message to a separate transmitter of the phone call redirection system 10 for subsequent transmission.

Returning to the embodiment of Figure 3, the phone call redirection system 10 is additionally provided with a call request processor 82 which is communicably coupled to the transmission receiver 80. When the transmission has been received and appropriately processed by the transmission receiver 80, it is then passed to the call request processor 82. The call request processor 82 is configured to process the received transmission and to retrieve information necessary for the further processing of the received transmission. This information will typically comprise the retrieval of ID information which corresponds to ID information of the client which is provided in the transmission. Where the transmission relates to an outgoing call data message in accordance with embodiments described above, the data message will typically comprise the client ID and the third party ID. In order to process the data message, it is necessary to retrieve the device ID and the proxy ID which corresponds to the provided client ID. Where the transmission relates to an incoming call in accordance with embodiments described above, the transmission will typically comprise the proxy ID and the third party ID. In order to process the transmission, it is necessary to retrieve the client ID which corresponds to the provided proxy ID and optionally the device ID. Where the transmission relates to a response to a call confirmation request data message, the data message will typically comprise either an affirmation or declination of a previous call confirmation request and a client ID. In embodiments where previously retrieved device ID information is not stored in a buffer, it is necessary to retrieve the device ID based on the previously provided proxy ID.

The information is retrieved from a database 84 which is communicably coupled to the call request processor 82. The database 84 contains data records which indicate the correspondence relationship between a client ID, a proxy ID and a device ID. Each entry in the database will typically be arranged in a lookup table. A query from the call request processor 82 will typically comprise a request which provides one of either the client ID or the proxy ID for a particular entry. The response to the query will typically comprise the corresponding device ID number relating to the provided client ID/proxy ID as well as the ID which was not used in the provision of the query

(i.e. the proxy ID/client ID respectively). In some embodiments, the database 84 may be external to the phone call redirection system 10. In these embodiments, the middleware platform 20 is suitably configured to enable the request for the ID information to be transmitted to the external database and to receive a result of the request from the external database. This may comprise providing a dedicated transmitter or receiver to the middleware platform 20 for this purpose or to use existing elements of the middleware platform 20 as described herein with reference to Figure 3.

The call request processor 82 is additionally communicably coupled to both a call instruction generator 86 and a call confirmation request generator 88 provided as part of the middleware platform 20. Upon retrieval of the ID information from the database 84, the call request processor 82 is configured to pass the transmission in addition to the retrieved information onto one of the call instruction generator 86 or the call confirmation request generator 88 in dependence upon the nature of the transmission. If the transmission relates to either an outgoing call request data message or a response to a call confirmation request data message, then the data message and the retrieved information are passed to the call instruction generator 86. If the transmission relates to an incoming call request, then the transmission and the retrieved information are instead passed to the call confirmation request generator 88.

The call instruction generator 86 is configured to receive the data message and the retrieved ID information from the call request processor 82 and subsequently generate call instructions to be executed by the PBX 22. The generation of the call instructions will typically comprise populating a call instruction data structure with the information required to establish communications between the client device 12 and the third party device 14.

When the call instructions are generated as a result of an outgoing call request, this will firstly comprise populating the call instruction data structure with the device ID to enable the PBX 22 to establish a client communications channel between the client device 12 and the corresponding endpoint. The generation of the call instructions will further comprise populating the call instruction data structure with the proxy ID to provide the third party device 14 with the proxy ID as the CLI. The generation of the call instructions will further comprise populating the call instruction data structure with the third party ID to enable the PBX 22 to establish a third party communications channel between the third party device 14 and the corresponding endpoint (using the proxy ID as the CLI). The generation of the call instructions will further comprise populating the call instruction data structure with instructions which direct the PBX 22 to initiate the two communications channels and to connect the two communications channels.

When the call instructions are generated as a result of an incoming call request, this will firstly comprise populating the call instruction data structure with the device ID to enable the PBX 22 to establish a client communications channel between the client device 12 and the corresponding endpoint. The generation of the call instructions will further comprise populating the call instruction data structure with instructions which direct the PBX 22 to initiate the communications channel and to connect the initiated communications channel with the third party communication channel used to create the incoming call request. In this scenario, it is not necessary to create the third party communications channel to the third party device 14 since one is already established. It is also not necessary to provide the proxy ID as the CLI to the third party device since the proxy ID was used to establish the incoming call request and is therefore already available to the third party device 14.

The call confirmation request generator 88 is configured to receive the transmission and the retrieved ID information from the call request processor 82 and subsequently generate a call confirmation request using the supplied information to be transmitted to the client device 12 using the client ID. The generation of the call confirmation request will typically comprise populating a call confirmation request data structure with the information required to provide a request to the client device 12 using the client ID to enable a user of the client device 12 to determine whether they wish to accept the incoming call request. This will comprise populating the call confirmation request data structure with the client ID to enable the request to be correctly directed to the client device 12. The generation will further comprise populating the call confirmation request data structure with the third party ID to enable a user of the client device 12 to be informed of the origin of the incoming call request. The generation will further comprise populating the call confirmation request data structure with instructions which cause the call confirmation request data structure to be sent to the identified client device 12 and to enable the call confirmation request to be executed on the client device 12.

The middleware platform 20 is additionally provided with an instruction and request transmitter 90 which is communicably coupled to the call instruction generator 86 and the call confirmation request generator 88. The instruction and request transmitter 90 is configured to receive both call instructions from the call instruction generator 86 and a call confirmation request from the call confirmation request from the call confirmation request generator 88. The instruction and request transmitter 90 is configured to transmit the received information to the suitable recipient in dependence upon the information received. Where the instruction and request transmitter 90 receives call instructions, the instruction and request transmitter 90 is configured to transmit the call instructions to the PBX 22 in accordance with the received call instruction data structure. Where the instruction and request transmitter 90 receives a call confirmation request, the instruction and request transmitter 90 is configured to transmit the call confirmation request to the client device 12 identified by the client ID via the external communications network 18 in accordance with embodiments described above.

Turning now to Figure 4A, there is shown a method of operation 100 of the middleware platform 20 of Figure 3. In particular the method 100 describes the method by which transmissions are received by the middleware platform 20 and required ID information is retrieved to enable the transmission to be processed.

The method begins by receiving, at Step 102, a transmission from either a client device 12 via the external communications network 18 (either an outgoing call request data message or a response to a call confirmation request data message), or from a third party device 14 via the PBX 22 (an incoming call request). Once the transmission is received, the transmission is passed to the call request processor 82 where the transmission is processed, at Step 104, to determine the nature of the transmission, i.e. whether the transmission relates to an outgoing call request data message, incoming call request or response to a call confirmation request data message. Where the transmission relates to an incoming call request data message, outgoing call request or an affirmative response to a call confirmation request data message, the action to be taken as a result will typically comprise the retrieval of required ID information from the database 84. Where the transmission relates to a call confirmation request data message indicating that an incoming call request has been accepted, the required ID information needed to process the data message may previously have been stored in a buffer. In embodiments where the required ID information is not stored in a buffer, the action to be taken will again comprise the retrieval of required ID information from the database 84. Where the information is stored in a buffer, the action will comprise querying the buffer to retrieve the required information. Where the transmission relates to a call confirmation request data message indicating that an incoming call request has been declined, no further action is required, since the incoming call will not be redirected to the client device 12.

Once the transmission has been processed, it is then determined, at Step 106, whether it is necessary to retrieve any ID information in order for the transmission to be further processed. This determination will comprise identifying the nature of the transmission. If it is determined that no further information is required (i.e. if the transmission relates to the declination of an incoming call request data message or if the transmission contains sufficient information to allow communications to be established), then the method proceeds to Step 114 (see below). If however it is determined that further ID information is required, the call request processor 82 then proceeds to determine, at Step 108 which ID information is required in order for the transmission to be processed. This is typically determined on the basis of the nature of the transmission (see above embodiments for the ID information which is provided and the ID information which is required).

Once the determination of the required ID information is performed, a query is then sent, at Step 110, to the database 84 for the required ID information. Where the transmission relates to an outgoing call request data message, this will typically comprise a query of the proxy ID and device ID of the client device 12 relating to the provided client ID. Where the transmission relates to an incoming call request, this will typically comprise a query of the client ID of the client device 12 and optionally the device ID of the client device 12 relating to the provided proxy ID. Where the transmission relates to a response to a previously generated call confirmation request and the device ID was not previously retrieved and stored in a buffer, then this will typically comprise a query of the device ID of the client device 12 relating to the provided client ID. In accordance with embodiments described above, the database 84 contains data records which indicate the correspondence relationship between a client ID, a proxy ID and a device ID. The database is typically arranged in the form of a lookup table. The query will contain instructions requesting that the required ID information is returned for the entry in the lookup table which contains the ID information supplied by the call request processor 82.

In embodiments in which the database 84 is located externally to the middleware platform 20, the query will first be transmitted to a suitable transmitter before the query is then transmitted to the external database. The query will comprise the same information as described in accordance with the embodiments above.

Returning to the embodiment of Figure 4A, once the query has been sent to the database 84, the requested information is then returned, at Step 112, to the call request processor 82. In combination with the information provided in the original transmission, there is now sufficient information to either generate call instructions or to generate a call confirmation request. In embodiments in which the database 84 is located externally to the middleware platform 20, the returned information will first be received by a suitable transmitter before the information is then passed to the call request processor 82. Following the receipt of the information in either such embodiment, it is then determined, at Step 114, whether call instructions should be generated. This is determined on the basis of the information provided in the originally received transmission. Where the transmission related to an outgoing call request data message or a positive response to a call confirmation request data message, it will be necessary to generate call instructions and the determination will be positive. In this case, the method 100 proceeds to Step 132 of Figure 4B and the data message and retrieved information is passed to the call instruction generator 86. If the transmission related to an incoming call request or a negative response to a call confirmation request data message, then it will not be necessary to generate call instructions at this time. If it is determined that call instructions are not to be generated, then it is further determined by the call request processor 82, at Step 116, whether it is necessary to generate a call confirmation request. This will be the case where the transmission related to an incoming call request. If it is determined that it is necessary to generate a call confirmation request, the method 100 proceeds to Step 142 of Figure 4C and the transmission and retrieved information is passed to the call confirmation request generator 88. If it is determined that it is not necessary, then the method 100 proceeds to end.

Turning now to Figure 4B, there is shown a method of operation 130 of the call instruction generator 86 and the instruction and request transmitter 90. In particular, Figure 4B shows the way in which call instructions are generated and subsequently transmitted to the PBX 22. The method 130 begins when a data message and retrieved ID information is received, at Step 132, from the call request processor 82. This will follow from Step 114 of Figure 4A. Once the data message and retrieved ID information have been received, a call instruction data structure is created and populated, at Step 134, to enable call instructions to be generated. When the call instructions are generated as a result of an outgoing call request, this will firstly comprise populating the call instruction data structure with the retrieved device ID to enable the PBX 22 to establish a client communications channel between the client device 12 and the corresponding endpoint. The generation of the call instructions will further comprise populating the call instruction data structure with the retrieved proxy ID to provide the third party device 14 with the proxy ID as the CLI. The generation of the call instructions will further comprise populating the call instruction data structure with the third party ID to enable the PBX 22 to establish a third party communications channel between the third party device 14 and the corresponding endpoint (using the proxy ID as the CLI). The generation of the call instructions will further comprise populating the call instruction data structure with instructions which direct the PBX 22 to initiate the two communications channels and to connect the two communications channels. When the call instructions are generated as a result of a positive response to a call confirmation request, the generation of the instructions will firstly comprise populating the call instruction data structure with the retrieved device ID to enable the PBX 22 to establish a client communications channel between the client device 12 and the corresponding endpoint. The generation of the call instructions will further comprise populating the call instruction data structure with instructions which direct the PBX 22 to initiate the client communications channel and to connect the initiated communications channel with the third party communication channel used to create the original incoming call request.

Once the call instruction data structure is created, the call instruction data structure is passed to the instruction and request transmitter 90 which proceeds to transmit, at Step 136, the call instruction data structure to the PBX 22. The transmitter 90 will be configured to identify from the call instruction data structure that the call instruction data structure should be transmitted to the PBX. Following this, the method of operation 130 proceeds to end.

Referring now to Figure 4C, there is shown a method of operation 140 of the call confirmation request generator 88 and the instruction and request transmitter 90. In particular, Figure 4C shows the way in which a call confirmation request is generated and subsequently transmitted to the client device 12 via the external communications network 18. The method 140 begins when a transmission and retrieved ID information is received, at Step 142, from the call request processor 82. This will follow from Step 116 of Figure 4A. Once the transmission and retrieved ID information have been received, a call confirmation request data structure is created and populated, at Step 144, to enable a call confirmation request to be generated. This will comprise populating the call confirmation request data structure with the retrieved client ID to enable the request to be correctly directed to the client device 12. The generation will further comprise populating the call confirmation request data structure with the third party ID to enable a user of the client device 12 to be informed of the origin of the incoming call request. The generation will further comprise populating the call confirmation request data structure with instructions which cause the call confirmation request data structure to be sent to the identified client device 12 and to enable the call confirmation request to be executed on the client device 12.

Once the call confirmation request data structure is created, the call confirmation request data structure is passed to the instruction and request transmitter 90 which proceeds to transmit, at Step 146, the call confirmation request data structure to the client device 12 via the external communications network 18. The transmitter 90 will be configured to identify from the call confirmation request data structure that the call confirmation request data structure should be transmitted to the client device 12. Following this, the method of operation 140 proceeds to end.

The above describes the system and operation of a phone call redirection system 10 in a particular arrangement. However it is to be appreciated that additional features may be included within the phone call redirection system 10 to introduce additional functionality. Examples of such additional features are described below. Each of these additional features may be included either individually or in combination to achieve the desired functionality.

### Application Functionality

In order to enable the client device 12 to communicate with the middleware platform 20, the client device 12 may be provided with an application which is configured to both transmit outgoing call requests to the middleware platform 20 and to receive and transmit call confirmation requests from and to the middleware platform 20. The application will include functionality to enable access to the functionality of the phone call and redirection system 10 as described above.

The application may include a requirement that a user of the client 12 first logs into the application with appropriate login information. This login information may comprise the client ID. During any communication with the phone call redirection system 10, the login information is used to identify the client. Where the login information comprises the client ID, any communications between the application and the phone call redirection system 10 may be configured to automatically supply the client ID which may then be utilised as described previously. Where such an application is provided to the client device 12, this provides the user with the ability to receive and place calls using both their device ID (outside of the application) and their proxy ID (through use of the application).

### Additional Functionality of Middleware Platform

In addition to enabling communications to be enabled between a client device 12 and a third party device 14, the phone call redirection system 10 (and more specifically the middleware platform 20) may be configured to provide additional functionality relating to the use of the system 10.

These additional functions may relate to enabling a user to query the call history associated with communications placed and received through the phone call redirection system 10. In such embodiments, a database may be provided which, upon communications being established between the client device 12 and the third party device 14, will generate a data entry populated with details regarding the call (such as the third party ID, the client ID, a timestamp indicating the date and time of the call, and the duration of the call). This database may be distinct from the database 84 which stores the ID information previously described. Alternatively, the database 84 may be configured to hold both types of information. The information may be provided as the communications are established and the relevant details are provided. In relation to the duration of the call, the PBX 22 may be configured to monitor when the communications channels connecting the client device 12 and the third party device 14 is terminated and will send this information back to the middleware platform 20 via the transmission receiver 80. The middleware platform 20 can be configured to determine when such information has been received and to update the database with the relevant information. In such cases, the call request processor 82 may be appropriately configured to determine when the transmission relates to the provision of call duration information and to transmit the information to the database accordingly. Once database entries are generated, the client device 12 may transmit a request to query the entries. Upon receiving the query (via the transmission receiver 80 or other suitable receiver), the phone call redirection system 10 will retrieve the requested information and supply the client device with the information (transmitted via the instruction and request transmitter 90 or other provided transmitter).

These additional functions may relate to enabling a user to query a contacts database associated with communications placed and received through the phone call redirection system 10. Upon receipt of an incoming call request, the phone call redirection system 10 may be configured to automatically retrieve the third party ID of the third party device 14 making the request and storing this in an appropriate database. This database may be distinct from the database 84 which stores the ID information previously described. Alternatively, the database 84 may be configured to hold both types of information. The phone call redirection system 10 may then be configured to send a transmission to the client device 12 using the client ID requesting that the third party ID be provided with a contact name. Upon provision of the contact name, the contact name will be stored in the contacts database, associated with the third party ID. Additionally, the phone call redirection system 10 may be configured to receive the addition of contact information including both a contact name and a third party ID directly from the client device 12. This information is then directly stored in the database.

In some circumstances, it may be beneficial to additionally store a record of the contact information on a backup memory in a location remote from the phone call redirection system 10. The backup memory may be updated whenever the contact database in the phone call redirection system 10 is updated. Upon the contact database being updated, a suitable transmission with the updated information may be transmitted using a suitably configured transmitter. The phone call redirection system 10 may also be configured to request information from the backup memory. This may be beneficial where a client to be set up shares contacts with another client (such as a user within the same business) and the provision of information from the backup memory may be used to quickly associate all of the contacts of a first client ID with another client ID upon appropriate permissions being provided.

### Use of an External Connection Device

In embodiments described above with reference to Figures 1 to 4C, when an outgoing call is placed, the phone call redirection system 10 is shown to be configured to receive an outgoing call request placed by the client device 12 through which communications are intended to be routed. Similarly, when an incoming call is received, the phone call redirection system 10 is shown to be configured to send the resulting call confirmation request to the client device 12 that the proxy ID is associated with.

In certain adaptations of the present invention, the phone call redirection system 10 is configured to receive outgoing call requests from both the client device 12 through which communications are intended to be routed as well as other origin locations. Similarly, during the process for processing an incoming call request, the phone call redirection system 10 is configured to be able to send the required call confirmation request to both the client device 12 that the proxy ID is associated with, and to other receiving locations. In such adaptations, the middleware platform 20 is configured to be able to route connections between a client device 12 and a third party device 14 as described with reference to Figures 1 to 4C, but where an external connection device which is distinct from the client device 12 may be used to either initiate an outgoing call or to confirm or reject a call confirmation request.

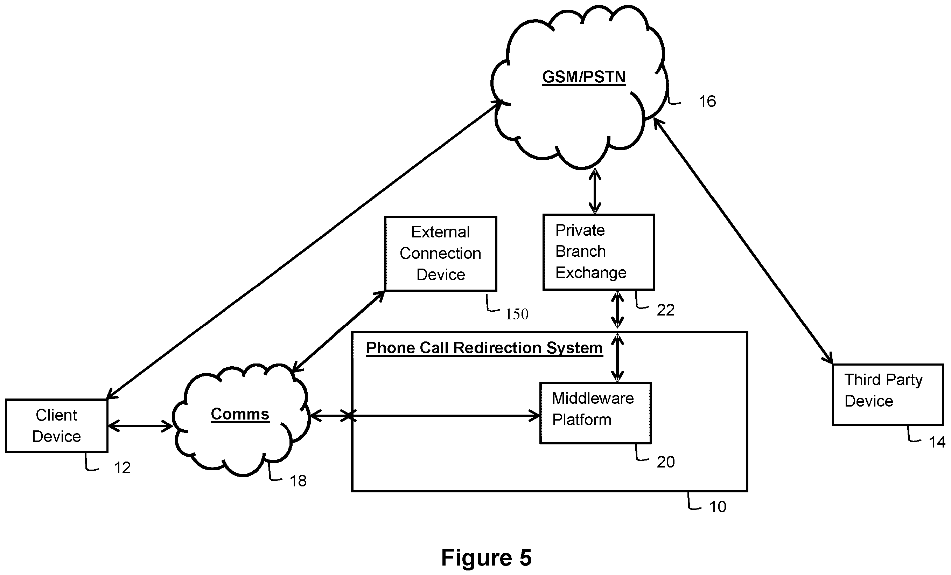

Turning now to Figure 5, there is shown a use scenario for a phone call redirection system 10 which routes communications between a first 12 and second 14 communications device. The use scenario is similar to that shown in Figure 1 however there is additionally shown an external connection device 150. The phone call redirection system 10 is configured to additionally receive transmissions from the external connection device 150 via the external communications network 18. The external connection device 150 may include any device which is suitable to generate, and subsequently transmit and receive transmissions to and from the phone call redirection system 10. Examples of such external connection devices 150 include mobile phone handsets, personal computers, tablet computers and laptops.

In these embodiments, the external connection device 150 may be configured to act as a proxy for the client ID and generate and receive transmissions as if it were the client device 12 that the client ID relates to. This may be achieved by logging into a suitable application using the client ID information. This may be a dedicated application, or a webpage which is configured to login a user as a particular client ID.

When the external connection device 150 is logged in to the application, it may then be used to indicate a third party ID that an outgoing call should be directed toward and send this outgoing call request to the phone call redirection system 10 (and more specifically the middleware platform 20). The request will include at least the client ID and the third party ID (in an analogous method to the client device 12 in the use scenario of Figure 1). Using this information, the phone call redirection system 10 is then configured to ascertain the device ID and the proxy ID associated with the client ID and will proceed to generate call instructions in accordance with embodiments described above.

Similarly, when the external connection device 150 is logged in to the application, it may then be used to respond to a call confirmation request sent by the phone call redirection system 10. In this scenario, when the call confirmation request is transmitted, the client ID included in the request will indicate that the request should be sent to the external connection device 150 that is logged in with this information. The user of the external connection device 150 may then either confirm or reject the request in an analogous method to those described in embodiments above. The incoming call is then either accepted or rejected accordingly in accordance with embodiments described above.

By configuring the phone call redirection system 10 to be able to communicate with one or more external connection devices 150, this enables communications to be routed between a client device 12 and a third party device 14 without requiring the client device 12 be used to establish the communications. This may be of particular use when the client device 12 is muted but a user of the client device is operating a computer. The user will be able to monitor when a phone call is received and respond appropriately.

### Voicemail

In some circumstances, when a call confirmation request is responded to negatively, it is desirable that, rather than the call be entirely rejected, the third party device 14 is instead routed to communicate with a voicemail inbox. This inbox will record communications sent by the third party device 14 and store the communications for later retrieval by the client device 12. The voicemail inbox will typically comprise a voicemail ID which can be used to establish a voicemail communications channel between the voicemail inbox and a corresponding endpoint. In such embodiments, upon determining that the incoming call request should be directed to the voicemail inbox, the call instruction generator 86 is configured to generate a call instruction data structure in accordance with embodiments described above. In particular the generation of the instructions will firstly comprise populating the call instruction data structure with the voicemail ID to enable the PBX 22 to establish a voicemail communications channel between the voicemail inbox and a corresponding endpoint. The generation of the call instructions will further comprise populating the call instruction data structure with instructions which direct the PBX 22 to initiate the voicemail communications channel and to connect the initiated communications channel with the third party communication channel used to create the original incoming call request. Where a voicemail inbox is provided, this may be provided as part of the phone call redirection system 10. Alternatively, the voicemail inbox may be located remotely from the phone call redirection system 10.

There may be a single voicemail inbox to which all rejected incoming call requests are routed and consequently a single voicemail ID which needs to be included in any call instruction data structures. In these cases, the call instruction generator 86 may be automatically configured to populate the call instruction data structure when it is determined that a communications channel with the voicemail inbox needs to be established. Alternatively, there may be a plurality of voicemail inboxes which may be used, each with a separate voicemail ID. For example, each client ID may have a separate voicemail inbox that all rejected incoming call requests for that ID are redirected to. In these cases, the call request processor 82 may be configured to retrieve the relevant voicemail ID of the selected voicemail inbox in a similar manner to the retrieval of proxy ID information, and subsequently provide this information to the call instruction generator 86.

### Setup and Maintenance of Client ID

In order for the phone call redirection system 10 to be used, it is necessary that the system 10 register and have access to details regarding the client ID which will use the system in order to include the required information in the database 84.This may be manually added by an operator of the system 10 and may comprise entering the client ID and device ID into the database 84 and additionally generating a new proxy ID to be associated with this ID information. Alternatively, the phone call redirection system 10 may be configured to receive requests from a client device to register and setup a new client ID record. In this case, the client device 12 will transmit a setup request to the phone call redirection system 10 providing a client ID and a device ID. The phone call redirection system 10 may receive this information using a suitable receiver. The phone call redirection system 10 may be configured to determine if a received transmission relates to a setup request and to process the transmission accordingly. This processing may comprise automatically generating a new proxy ID, and storing this ID with the client ID and the device ID in a database in order to be accessed at a later time in accordance with embodiments described above. In some arrangements, the generation of a new proxy ID comprises requesting a new proxy ID from a third party network connector which forms part of the PSTN/GSM telephony network 16. This provided proxy ID is then received by the phone call redirection system 10 and is stored with the client ID and device ID as described above.

When registering a new user, it may be beneficial to include a level of security in order to ensure that a client ID is not spoofed by a separate device. This may include requiring that a user provides a password to the phone call redirection system 10 that is to be associated with the client ID which is received via a receiver of the phone call redirection system 10. Similarly if the client record is set up by an operator of the phone call redirection system 10, this may comprise providing a password to be transmitted to the client device 12 upon creation of the new client record. Whenever the client wishes to use the functionality of the phone call redirection system 10, they may be required to provide this password information before they can do so.

In certain cases, it may be beneficial to use a remotely located security platform to provide the user authentication and application security features. The platform may be responsible for registering client devices 12 and IDs when they sign up for the service and authenticating them when they login to the applications. Each time the user interacts with the phone call redirection system 10 (for example to place a call or manage their client details), the client device 12 must provide a token to be verified by the security platform. If the token is verified correctly the requested operation is performed, if verification fails, the operation fails, and the client ID is denied access to the requested service.

It may also be desirable that information relating to a client ID be updated. For example, when the device relating to a client ID is changed, it may be necessary to similarly update the device ID associated with the client ID. Alternatively, a client may no longer wish for their details to be included on the phone call redirection system 10. In these scenarios, the phone call redirection system 10 may be configured to receive update instructions which modify the client data record. This may be achieved in a similar manner to the manner in which the client details are initially registered to the system.

### Publish and Subscribe Messaging System

In some scenarios, the phone call redirection system 10 may be provided with a publish and subscribe messaging system. In this case, the phone call redirection system 10 is provided with a message bus which is configured to be provided with each transmission that is received by the phone call redirection system 10. Upon receipt of a transmission, the message bus is configured to determine the nature of the transmission (e.g. an outgoing call request data message or incoming call request, a response to a call confirmation request data message, a request to update information associated with a client ID etc). Upon determining the nature of the request, the message bus is configured to publish to other components in the phone call redirection system 10 that the request has been received.

Each other component in the phone call redirection system 10 may be configured to subscribe to certain published message types which are related to that component. For example, the call request processor 82 may be configured to subscribe to published messages relating to incoming and outgoing call requests. The components may then be configured to request information related to the transmissions from the message bus as and when a related publication is made. In this scenario each component which requests information from the message bus is communicably coupled to the message bus. This arrangement may be used to enable the functionality of the system described in Figures 1 to 4C.

The message bus may be additionally provided with a message queue. In the scenario where multiple transmissions are received simultaneously, the message queue allows each message to be temporarily held until such a time that the message bus can publish that the transmission has been received. Additionally, in some instances, one or more components may be temporarily off line or busy. The provision of a queue allows the information in the transmission to be held until the relevant components become available to process the published transmission.

### Connection to Multiple Third Party Devices

In some scenarios, the phone call redirection system 10 may be configured to generate call instructions which enable communication between a client device 12 and a plurality of third party devices 14 simultaneously. In this case, when a client device 12 generates an incoming call request, the data message which is transmitted to the phone call redirection system 10 may in addition to providing a client ID and a device ID also provide a plurality of third party IDs.

In such scenarios, upon receipt of a data message containing a plurality of third party IDs, the phone call redirection system 10 may be configured to populate a call instruction data structure in accordance with embodiments described above. This call instruction data structure may then be populated in a similar manner as described above, but with the inclusion of the plurality of third party IDs and with instructions which direct the PBX 22 to initiate the client communications channel, a plurality of third party communications channels, and to connect each of the established communications channels. This arrangement is enabled using standard conference call protocol procedures.

### Example Implementation

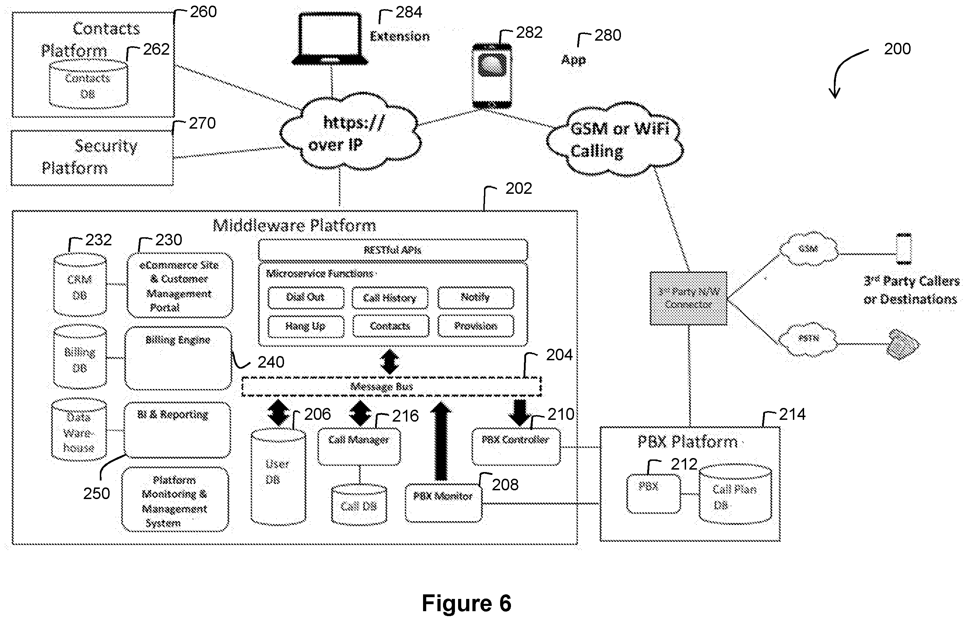

There is now described with reference to Figure 6 an example of the described invention implemented in a use scenario 200. The example implementation includes the use of the phone call redirection system 10 in accordance with the system described with reference to Figures 1 to 4C, in addition to several features included to achieve the additional functionality described above.

There is firstly shown a middleware platform 202. The middleware platform includes a message bus 204. The message bus 204 utilises a publish and subscribe messaging mechanism that enables platform components to communicate without being bound directly to one another. Using this mechanism, a component can inform other platform components of some event or service request by publishing a message to a specific topic on the bus without needing to know anything about the other components that might be interested in the topic. In turn, the components that are interested in the topic can register their interest with the bus by subscribing to the topic so that the bus will then inform them when anything of interest is published. The message bus 204 additionally provides message queues which provide temporary storage for messages to ensure their reliable delivery to other interested components even if they are temporarily off line or busy.

The middleware platform 202 additionally includes a user database 206. The user database maintains details of a profile of a user of a client device. This profile includes their preferences (such as whether to send rejected incoming call requests to a voicemail inbox) and ID information (device IDs, client IDs and proxy IDs) as described above.

The middleware platform 202 additionally includes a PBX monitor 208 and a PBX controller 210. These components allow for the receipt of incoming call requests and for the transmission of call instructions from and to the PBX 212 respectively. These components provide an interface for monitoring and managing the PBX platform 214. It allows for the live monitoring of events that occur in the PBX 212 system and enables commands to be sent to the PBX 212 to perform various telephony tasks. The middleware platform's PBX monitor 208 is a platform component responsible for tracking all communication activity generated by the PBX and filtering it for events that are of interest to the platform. Each event of interest to the platform is captured, repackaged and published to the message bus 204 for any other interested components to then act upon. The PBX controller 210 enables other middleware platform 202 components to instruct the PBX 212 to perform various actions, such as placing a call or requesting the status of an ongoing call.

The middleware platform 202 additionally includes a call manager 216. The call manager 216 is responsible for coordinating all calls made to and from the platform and works in close collaboration with the PBX monitor 208 and PBX controller 210. It subscribes to messages published to the message bus by the PBX monitor 208 relating to incoming calls and listens for requests from other middleware platform 202 components wishing to make outgoing calls.

The middleware platform 202 additionally shows an eCommerce site 230. The eCommerce site 230 is the main marketing and promotional web site for the invention, accessible through any major browser. The site presents regularly updated information about the service, its key features and benefits and details of the pricing plans available.

The site offers new customers the opportunity to sign up for the service and try it free of charge for an initial period. Once the customer signs up for the full service and provides their billing details to the application they can register and manage any number of users and Application Services through the customer management portal. The application gives users easy access to their account details, allowing them to manage their contact information and security credentials held in the platform, for example update name and contact details, telephone numbers, office location, passwords, etc.

The customer management portal also provides further functionality for administrative users. A customer's system administrator can manage their users' accounts and access rights for individual employees, groups or departments. Batch features are offered through the application to simplify registration and account management for multiple users through the import of spreadsheets or existing user data. This facilitates the setting up standard organisation or department wide credentials and preferences. Customer financial administrators have secure access through the management portal to manage credit card details used for recurring subscription payments, access their account statements and previous invoices. All data captured and managed through the eCommerce site and management portal is held in the platform's Customer Relationship Management (CRM) database 232.

The middleware platform 202 of Figure 6 also comprises a billing engine 240, that is responsible for pricing every call as it takes place so that the business can understand the on-going profitability of the service, monitor fraudulent usage and alert customers when call cost thresholds are about to be breached. To perform the pricing calculation the billing engine obtains call data records for each call from the PBX 212. These records contain details of the start time, duration and the phone numbers involved. This data is combined with the billing engine's call pricing data to arrive at the business' cost and customer price for the call. In addition to the live calculation of call costs, the billing engine 240 generates the necessary billing records to be invoiced on customer bills at the end of each monthly billing period considering any applicable subscription packages, call bundles, trial periods or discounts.

The middleware platform 202 of Figure 6 also comprises a BI & Reporting component 250, configured to maintain a data warehouse for storing and manipulating data generated by every component of the platform for example call details, application service requests or user account activity. To simplify access to this data, the component provides several standard dashboard reports to support both the business and its customers. These dashboard reports are supplemented by a query tool that enables ad-hoc reports or extracts of the data warehouse data to be generated. The data available to customer dashboards or ad-hoc queries is limited to a sub-set of the data warehouse data that only relates to the specific customer and their users. Access to the BI & Reporting component's data and tools is restricted to a specific administrative user security group within each customer.

The use scenario 200 of Figure 6 also includes a PBX platform 214 within which the PBX 212 resides. In certain embodiments, the PBX 212 is based on the Asterisk open source communications system (www.asterisk.org). It provides all the telephony requirements of the platform, enabling calls to be made and received. The PBX 212 also supports calls handled directly through its own connections to third-party network service providers to PSTN and GSM networks.

In certain embodiments the full range of PBX features provided by Asterisk are accessed via the user interface presented through the FreePBX open source platform. This system enables users of the phone call redirection system in the use scenario 200 to set up and manage various call features such as ring groups and call diverts for their users.

In some embodiments the PBX platform 214 is implemented as a clustered design that makes it highly scalable, performant and fault tolerant. No individual PBX server is relied on to maintain a call in progress and a series of load balancing servers are responsible for distributing the load across the PBX servers as requests to connect calls are received. The load balancers themselves are also replicated and geographically dispersed to again ensure that no individual point of failure exists within the platform 214.

In the use scenario 200 of Figure 6, the middleware platform 202 can be accessed by way of an application 280. The application provides users with a means of interacting with the platform 202 functionality through either their mobile device 282, which may be running a suitable operating system or through a webpage browser extension 284.

When an application 280 is installed on a mobile device 282, these applications provide users with identical functionality and access to the middleware platform 202. In certain embodiments, once the application 280 has been started up the user is given the opportunity to log in or to sign up to use the phone call redirection system (in which case the user will be required to provide ID information and optionally security information such as a password).

Once a user has successfully logged in to the application 280 they have access to both the mobile phone's 282 native dialler to make personal calls and the application dialler, which is comprised in the application, to make and receive business calls using their proxy ID. The user can easily switch between personal and business mode at the touch of a button available on every page of the application 280.

When making an outgoing call from the application 280, a call back mechanism is employed so that once a call has been requested the middleware platform 202 first calls the user on their registered mobile number before placing the call through to the destination number. Similarly, if a user receives a call to their proxy ID, the PBX 212 and middleware platform 202 first send them a push notification with details of the caller which the user can then decide to accept or reject. In other embodiments, the notification is send via means other than a push notification (for example, a pull notification). If the call is accepted the PBX platform 214 then connects the caller to the user's device ID over the GSM network and if the call is rejected the caller is diverted to the voicemail inbox associated with the user's proxy ID on the PBX platform 214.

To facilitate the making and receiving of calls in the application 280 the user can access separate business and personal lists of favourite numbers and contacts that are synchronised with an external contacts platform 260. The application 280 also maintains a separate call history for the user's recent personal and business calls and provides access to their personal and voicemail services.

The application supports a business call "do not disturb" feature that enables users, for example out of business hours, to divert calls made to their proxy ID automatically to their voicemail service hosted on the PBX platform 214.

When the application 280 is installed on a web browser, it may be provided as a browser extension 284. The extension 284 enables telephone numbers to be identified and selected on web-pages by a user and then through a mouse click on the selected number, to place a call to the number through the middleware platform 202. The platform 202 then in turn connects the user to the requested number via a call back to their registered device.

In the use scenario of Figure 6, a number of third-party networks may be used to provide the required functionality, namely: Mobile IP networks - WiFi or 3G/4G, GSM mobile voice networks and Public Switched Telephone Networks (PSTN).

Mobile IP networks may be used to issue commands between the middleware platform 202 and the application, for example notifications regarding outgoing or incoming calls. Such notifications may be communicated using a mobile device's active WiFi network connection or its 3G/4G mobile data connection. It is also envisaged that once operable, 5G mobile data connections may also be used for this purpose.

In certain cases, the GSM mobile voice networks are used for forwarding voice calls to and from the user's mobile device, rather than connecting them over IP. In certain embodiments the PBX platform 214 may establish the connections over GSM via third-party commercial network interconnectors, such as Gamma in the UK.

These interconnectors also provide the middleware platform's 202 connections to the PSTN networks for placing and receiving calls to and from land-line numbers.

The use scenario 200 of Figure 6 also shows a remotely located contacts platform 260, which may be configured to utilise a third-party cloud-based service to store each user's business contacts in a secure, redundant and backed up database 262. The contacts platform 260 may make use of near real-time synchronisation features to ensure the customer's contacts are kept up to date whenever changes are made by the business or an individual user. The contacts platform 260 supports operations for creating, reading, updating and deleting business contacts by the application.

In certain scenarios, the user may choose to install a supporting application on their legacy business mobile device that facilitates the copying of business contacts held on legacy business mobile devices to the contacts platform 260 for synchronisation with the application.

In the use scenario 200 of Figure 6, the invention is shown with a security platform 270 to provide the user authentication and application security features required by the application. The platform is based on the industry-standard protocol for user authentication OAuth 2.0 (https://oauth.net/2/).

The security platform 270 may be responsible for registering users when they sign up for the service and authenticating them when they login to the applications. Each time the user interacts with the service, for example to place a call or manage their account in the web portal, the application must provide a token to be verified by the security platform 270. If the token is verified correctly the requested operation is performed, if verification fails, the operation fails, and the user is denied access to the requested service.

It is to be understood that features, advantages and functionality of the different embodiments described herein may be combined where context allows.

Having described several exemplary embodiments of the present invention and the implementation of different functions of the device in detail, it is to be appreciated that the skilled addressee will readily be able to adapt the basic configuration of the system to carry out described functionality without requiring detailed explanation of how this would be achieved. Therefore, in the present specification several functions of the system have been described in different places without an explanation of the required detailed implementation as this not necessary given the abilities of the skilled addressee to code functionality into the system.

## Claims

1. A system (20) for routing communications between a client device (12) and a third party device (14), the client device (12) having a device ID, and a plurality of proxy IDs and the third party device (14) having a third party ID, the system (20) comprising:
an input means (80) to receive:
a connection request from the client device (12) to connect to the third party device (14), wherein the connection request comprises a client ID used to uniquely identify the origin of the connection request;
a processor (86) configured to generate call instructions to be executed on a networking device, the call instructions comprising:
i) instructions to call the client device (12) with a client communications channel using the device ID;
ii) instructions to call the third party device (14) with a third party communications channel once the call to the client device (12) has been placed, using the third party ID and using one of the plurality of proxy IDs as a caller ID, wherein the processor (86) is configured to select the proxy ID to be used as the caller ID from the plurality of proxy IDs on the basis of information supplied in the connection request; and
iii) instructions to connect the client and third party communications channel; and
an output means (90) configured to output the call instructions to the networking device; and a security platform (270) configured to verify the client ID, wherein the client device (12) identity is confirmed by the provision of a security token associated with the client ID to the security platform (270).

2. The system (20) of Claim 1, wherein the input means (80) is additionally configured to receive a connection request from an external communications device to connect the client device (12) to the third party device (14).

3. The system (20) of any previous claim, wherein the connection request comprises the third party ID and information relating to the device ID and the proxy ID.

4. The system (20) of Claim 3, wherein the processor (86) is configured to generate call instructions based on the information relating to the device ID and the proxy ID provided in the connection request.

5. The system (20) of any previous claim, where the client communications channel comprises a PSTN connection or a GSM connection, and the third party communications channel comprises a PSTN connection or a GSM connection.

6. The system (20) of any previous claim, the system (20) further comprising the networking device

7. The system (20) of any previous claim, wherein the networking device comprises a private branch exchange (22).

8. The system (20) of any previous claim, the system (20) being further configured to receive connection requests from a plurality of client devices, each client device having a device ID and a proxy ID, and the processor (86) being configured to generate call instructions using the device ID and the proxy ID of the client device providing the connection request.

9. The system (20) of Claim 1, the system (20) further comprising a database (84) containing data records, each data record providing a correspondence relationship between the client ID, the device ID and the proxy ID, and wherein the processor (86) is configured to query the database (84) to determine the correspondence relationship in order to generate call instructions for the networking device.

10. The system (20) of any of Claims 1 to 9, the system (20) further comprising a database (84) containing data records, each data record providing a correspondence relationship between the client device (12), the device ID and the proxy ID, and wherein the processor (86) is configured to query the database (84) to determine the correspondence relationship in order to generate call instructions for the networking device.

11. A method for routing communications between a client device (12) and a third party device (14), the client device (12) having a device ID and a plurality of proxy IDs and the third party device (14) having a third party ID, the method comprising:
receiving a connection request from the client device (12) to connect to the third party device (14), wherein the connection request comprises a client ID used to uniquely identify the origin of the connection request;
verifying, using a security platform (270) the client ID by confirming the provision of a security token associated with the client ID to the security platform (270);
generating call instructions to be executed by a networking device, the call instructions comprising:
i) instructions to call the client device (12) with a client communications channel using the device ID;
ii) instructions to call the third party device (14) with a third party communications channel once the call to the client device (12) has been placed, using the third party ID and using one of the plurality of proxy IDs as a caller ID, wherein the proxy ID to be used as the caller ID is selected from the plurality of proxy IDs on the basis of information supplied in the connection request; and
iii) instructions to connect the client and third party communications channels; and
outputting the call instructions to the networking device.

12. A computer program product comprising instructions which, when the program is executed by a computer, cause the computer to carry out the method of Claim 11.

## Patentansprüche

1. System (20) zur Weiterleitung von Kommunikationen zwischen einem Client-Gerät (12) und einem Fremdgerät (14), wobei das Client-Gerät (12) eine Geräte-ID und eine Vielzahl von Proxy-IDs aufweist und das Fremdgerät (14) eine Fremdgeräte-ID aufweist, wobei das System (20) Folgendes umfasst:
Ein Eingabemittel (80) zum Empfangen:
Einer Verbindungsanforderung vom Client-Gerät (12) zur Verbindung des Fremdgeräts (14), wobei die Verbindungsanforderung eine Client-ID umfasst, um den Ursprung der Verbindungsanforderung eindeutig zu identifizieren;
einen Prozessor (86), der konfiguriert ist, Anrufanweisungen zu generieren, die auf einer Netzwerkkomponente auszuführen sind, wobei die Anrufanweisungen umfassen:
i) Anweisungen zum Anrufen des Client-Geräts (12) über einen Client-Kommunikationskanal unter Verwendung der Geräte-ID;
ii) Anweisungen zum Anrufen des Fremdgeräts (14) über einen Fremdgerät-Kommunikationskanal, nachdem der Anruf an das Client-Gerät (12) getätigt worden ist, unter Verwendung der Fremdgerät-ID und unter Verwendung einer der Vielzahl von Proxy-IDs als Anrufer-ID, wobei der Prozessor (86) so konfiguriert ist, dass er auf Basis der in der Verbindungsanforderung bereitgestellten Informationen die als Anrufer-ID zu verwendende Proxy-ID aus der Vielzahl von Proxy-IDs auswählt; und
iii) Anweisungen zur Verbindung des Client- und des Fremdgerät-Kommunikationskanals; und
ein Ausgabemittel (90), das so konfiguriert ist, dass es die Anrufanweisungen an die Netzwerkkomponente ausgibt; und
eine Sicherheitsplattform (270), die so konfiguriert ist, dass sie die Client-ID verifiziert, wobei die Identität des Client-Geräts (12) durch das Bereitstellen eines mit der Client-ID verknüpften Sicherheitstokens an die Sicherheitsplattform (270) bestätigt wird.

2. System (20) nach Anspruch 1, wobei das Eingabemittel (80) zusätzlich dazu konfiguriert ist, eine Verbindungsanforderung von einem externen Kommunikationsgerät zu empfangen, um das Client-Gerät (12) mit dem Fremdgerät (14) zu verbinden.

3. System (20) nach irgendeinem vorhergehenden Anspruch, wobei die Verbindungsanforderung die Fremdgerät-ID und Information umfasst, die sich auf die Geräte-ID und die Proxy-ID beziehen.

4. System (20) nach Anspruch 3, wobei der Prozessor (86) dazu konfiguriert ist, Anrufanweisungen auf Basis der Informationen zu generieren, die sich auf die in der Verbindungsanforderung bereitgestellte Geräte-ID und die Proxy-ID beziehen.

5. System (20) nach irgendeinem vorhergehenden Anspruch, wo der Client-Kommunikationskanal eine PSTN-Verbindung oder eine GSM-Verbindung umfasst, und der Fremdgerät-Kommunikationskanal eine PSTN-Verbindung oder eine GSM-Verbindung umfasst.

6. System (20) nach irgendeinem vorhergehenden Anspruch, wobei das System (20) ferner die Netzwerkkomponente umfasst.

7. System (20) nach irgendeinem vorhergehenden Anspruch, wobei die Netzwerkkomponente eine Nebenstellenanlage (22) umfasst.

8. System (20) nach irgendeinem vorhergehenden Anspruch, wobei das System (20) ferner konfiguriert ist, Verbindungsanforderungen von einer Vielzahl von Client-Geräten zu empfangen, wobei jedes Client-Gerät eine Geräte-ID und eine Proxy-ID aufweist, und der Prozessor (86) konfiguriert ist, Anrufanweisungen unter Verwendung der Geräte-ID und der Proxy-ID des Client-Geräts zu generieren, welches die Verbindungsanforderung bereitstellt.

9. System (20) nach Anspruch 1, wobei das System (20) ferner eine Datensätze enthaltende Datenbank (84) umfasst, wobei jeder Datensatz eine Korrespondenzbeziehung zwischen der Client-ID, der Geräte-ID und der Proxy-ID herstellt, und wobei der Prozessor (86) konfiguriert ist, die Datenbank (84) abzufragen, um die Korrespondenzbeziehung zu ermitteln, um Anrufanweisungen für die Netzwerkkomponente zu generieren.

10. System (20) nach irgendeinem der Ansprüche 1 bis 9, wobei das System (20) ferner eine Datensätze enthaltende Datenbank (84) umfasst, wobei jeder Datensatz eine Korrespondenzbeziehung zwischen dem Client-Gerät (12), der Geräte-ID und der Proxy-ID herstellt, und wobei der Prozessor (86) konfiguriert ist, die Datenbank (84) abzufragen, um die Korrespondenzbeziehung zu ermitteln, um Anrufanweisungen für die Netzwerkkomponente zu generieren.

11. Verfahren zur Weiterleitung von Kommunikationen zwischen einem Client-Gerät (12) und einem Fremdgerät (14), wobei das Client-Gerät (12) eine Geräte-ID und eine Vielzahl von Proxy-IDs aufweist und das Fremdgerät (14) eine Fremdgeräte-ID aufweist, wobei das Verfahren umfasst:
Empfangen einer Verbindungsanforderung vom Client-Gerät (12) zur Verbindung des Fremdgeräts (14), wobei die Verbindungsanforderung eine Client-ID umfasst, die dazu verwendet wird, den Ursprung der Verbindungsanforderung eindeutig zu identifizieren;
Verifizieren, unter Verwendung einer Sicherheitsplattform (270), der Client-ID durch Bestätigen der Bereitstellung eines mit der Client-ID verknüpften Sicherheitstokens an die Sicherheitsplattform (270);
Generieren von Anrufanweisungen, die von einer Netzwerkkomponente auszuführen sind, wobei die Anrufanweisungen umfassen:
i) Anweisungen zum Anrufen des Client-Geräts (12) über einen Client-Kommunikationskanal unter Verwendung der Geräte-ID;
ii) Anweisungen zum Anrufen des Fremdgeräts (14) über einen Fremdgerät-Kommunikationskanal, nachdem der Anruf an das Client-Gerät (12) getätigt worden ist, unter Verwendung der Fremdgerät-ID und unter Verwendung einer der Vielzahl von Proxy-IDs als Anrufer-ID, wobei die Proxy-ID, die als die Anrufer-ID zu verwenden ist, auf der Basis der in der Verbindungsanforderung bereitgestellten Informationen aus der Vielzahl von Proxy-IDs ausgewählt wird; und
iii) Anweisungen zur Verbindung der Client- und Fremdgerät-Kommunikationskanäle; und
Ausgeben der Anrufanweisungen an die Netzwerkkomponente.

12. Computerprogrammprodukt, das Anweisungen umfasst, die, wenn das Programm von einem Computer ausgeführt wird, bewirken, dass der Computer ein Verfahren nach Anspruch 11 ausführt.

## Revendications

1. Système (20) de routage de communications entre un dispositif client (12) et un dispositif tiers (14), le dispositif client (12) ayant un identifiant de dispositif, et une pluralité d'identifiants de mandataire et le dispositif tiers (14) ayant un identifiant de tiers, le système (20) comprenant :
un moyen d'entrée (80) pour recevoir :
une demande de connexion à partir du dispositif client (12) pour se connecter au dispositif tiers (14), dans lequel la demande de connexion comprend un identifiant de client utilisé pour identifier de manière unique l'origine de la demande de connexion ;
un processeur (86) configuré pour générer des instructions d'appel à exécuter sur un dispositif de réseautage, les instructions d'appel comprenant :
i) des instructions pour appeler le dispositif client (12) avec un canal de communications de client à l'aide de l'identifiant de dispositif ;
ii) des instructions pour appeler le dispositif tiers (14) avec un canal de communications de tiers une fois l'appel au dispositif client (12) passé, à l'aide de l'identifiant de tiers et à l'aide de l'un de la pluralité d'identifiants de mandataire en tant qu'identifiant d'appelant, dans lequel le processeur (86) est configuré pour sélectionner l'identifiant de mandataire à utiliser en tant qu'identifiant d'appelant à partir de la pluralité d'identifiants de mandataire sur la base d'informations fournies dans la demande de connexion ; et
iii) des instructions pour connecter le client et le canal de communications de tiers ; et
un moyen de sortie (90) configuré pour fournir en sortie les instructions d'appel au dispositif de réseautage ; et
une plateforme de sécurité (270) configurée pour vérifier l'identifiant de client, dans lequel l'identité du dispositif client (12) est confirmée par la fourniture d'un jeton de sécurité associé à l'identifiant de client à la plateforme de sécurité (270).

2. Système (20) selon la revendication 1, dans lequel le moyen d'entrée (80) est, de plus, configuré pour recevoir une demande de connexion à partir d'un dispositif de communications externe pour connecter le dispositif client (12) au dispositif tiers (14).

3. Système (20) selon l'une quelconque des revendications précédentes, dans lequel la demande de connexion comprend l'identifiant de tiers et des informations relatives à l'identifiant de dispositif et à l'identifiant de mandataire.

4. Système (20) selon la revendication 3, dans lequel le processeur (86) est configuré pour générer des instructions d'appel sur la base des informations relatives à l'identifiant de dispositif et à l'identifiant de mandataire fournies dans la demande de connexion.

5. Système (20) selon l'une quelconque des revendications précédentes, où le canal de communications de client comprend une connexion PSTN ou une connexion GSM, et le canal de communications de tiers comprend une connexion PSTN ou une connexion GSM.

6. Système (20) selon l'une quelconque des revendications précédentes, le système (20) comprenant en outre le dispositif de réseautage.

7. Système (20) selon l'une quelconque des revendications précédentes, dans lequel le dispositif de réseautage comprend un autocommutateur privé (22).

8. Système (20) selon l'une quelconque des revendications précédentes, le système (20) étant en outre configuré pour recevoir des demandes de connexion à partir d'une pluralité de dispositifs clients, chaque dispositif client ayant un identifiant de dispositif et un identifiant de mandataire, et le processeur (86) étant configuré pour générer des instructions d'appel à l'aide de l'identifiant de dispositif et de l'identifiant de mandataire du dispositif client fournissant la demande de connexion.

9. Système (20) selon la revendication 1, le système (20) comprenant en outre une base de données (84) contenant des archives de données, chaque archive de données fournissant une relation de correspondance entre l'identifiant de client, l'identifiant de dispositif et l'identifiant de mandataire, et dans lequel le processeur (86) est configuré pour interroger la base de données (84) pour déterminer la relation de correspondance afin de générer des instructions d'appel pour le dispositif de réseautage.

10. Système (20) selon l'une quelconque des revendications 1 à 9, le système (20) comprenant en outre une base de données (84) contenant des archives de données, chaque archive de données fournissant une relation de correspondance entre le dispositif client (12), l'identifiant de dispositif et l'identifiant de mandataire, et dans lequel le processeur (86) est configuré pour interroger la base de données (84) pour déterminer la relation de correspondance afin de générer des instructions d'appel pour le dispositif de réseautage.

11. Procédé de routage de communications entre un dispositif client (12) et un dispositif tiers (14), le dispositif client (12) ayant un identifiant de dispositif et une pluralité d'identifiants de mandataire et le dispositif tiers (14) ayant un identifiant de tiers, le procédé comprenant :
la réception d'une demande de connexion à partir du dispositif client (12) pour se connecter au dispositif tiers (14), dans lequel la demande de connexion comprend un identifiant de client utilisé pour identifier de manière unique l'origine de la demande de connexion ;
la vérification, à l'aide d'une plateforme de sécurité (270), de l'identifiant de client par confirmation de la fourniture d'un jeton de sécurité associé à l'identifiant de client à la plateforme de sécurité (270) ;
la génération d'instructions d'appel à exécuter par un dispositif de réseautage, les instructions d'appel comprenant :
i) des instructions pour appeler le dispositif client (12) avec un canal de communications de client à l'aide de l'identifiant de dispositif ;
ii) des instructions pour appeler le dispositif tiers (14) avec un canal de communications de tiers une fois l'appel au dispositif client (12) passé, à l'aide de l'identifiant de tiers et à l'aide de l'un de la pluralité d'identifiants de mandataire en tant qu'identifiant d'appelant, dans lequel l'identifiant de mandataire à utiliser en tant qu'identifiant d'appelant est sélectionné à partir de la pluralité d'identifiants de mandataire sur la base d'informations fournies dans la demande de connexion ; et
iii) des instructions pour connecter le client et des canaux de communications de tiers ; et
la fourniture en sortie des instructions d'appel au dispositif de réseautage.

12. Produit programme d'ordinateur comprenant des instructions qui, lorsque le programme est exécuté par un ordinateur, amènent l'ordinateur à effectuer le procédé de la revendication 11.
